# EUROPÄISCHE PATENTSCHRIFT

(11) **EP 0 996 932 B1**
(45) Veröffentlichungstag und Bekanntmachung des Hinweises auf die Patenterteilung: **12.12.2001**
(21) Anmeldenummer: 98945092.9
(22) Anmeldetag: 24.07.1998
(51) Int. Cl.: G06K 19/077

(54) **KONTAKTLOS BETREIBBARER DATENTRÄGER**
DATA CARRIER WHICH CAN BE OPERATED WITHOUT CONTACT
SUPPORT DE DONNEES EXPLOITABLE SANS CONTACT

(30) Priorität: 24.07.1997 DE 19731983
(43) Veröffentlichungstag der Anmeldung: 03.05.2000
(73) Patentinhaber: Giesecke & Devrient GmbH, 81677 München (DE)
(72) Erfinder: WELLING, Ando, D-84424 Isen (DE)
(74) Vertreter: Höhfeld, Jochen
(86) Internationale Anmeldenummer: EP9804651
(87) Internationale Veröffentlichungsnummer: WO9905647

(56) Entgegenhaltungen:
- EP-A- 0 595 549
- WO-A-97/12263
- FR-A- 2 662 896
- GB-A- 2 279 611
- US-A- 5 147 210

## Beschreibung

Die Erfindung betrifft einen Datenträger, der einen integrierten Schaltkreis und wenigstens ein isolierendes Trägersubstrat aufweist, auf dem ein Übertragungselement für die Datenübertragung zu einer externen Einrichtung angeordnet ist, und ein Verfahren zur Herstellung eines derartigen Datenträgers.

Ein Datenträger der oben genannten Art ist bereits aus der EP 0 756 244 A2 bekannt, deren Offenbarung für die weitere Beschreibung zugrunde gelegt wird. In der EP 0756 244 A2 ist eine Schaltungseinheit mit einem isolierenden Trägersubstrat, auf dem sich eine leitende flache Spule befindet, beschrieben. Die Spule kann aus mehreren Spulenlagen bestehen, die durch isolierende Schichten getrennt sind. Um die einzelnen Spulenlagen zu einer Spule zusammenzuschalten, ist in jeder der isolierenden Schichten wenigstens eine Durchbrechung vorgesehen. Die Verbindung zwischen den Spulenenden und einem integrierten Schaltkreis bzw. einem elektronischen Modul, das den integrierten Schaltkreis enthält, kann allein dadurch erfolgen, dass sich die Spulenenden und die Anschlusspunkte des integrierten Schaltkreises bzw. die Kontakte des Moduls berühren. Die einzelnen Spulenwindungen der Spule können so angeordnet und so dimensioniert werden,dass die Schaltungseinheit innerhalb eines von der Norm vorgegebenen Bereiches uneingeschränkt hochprägbar ist.

Besonders wichtig für ein einwandfreies Funktionieren des Datenträgers ist eine über die gesamte Lebensdauer des Datenträgers zuverlässige elektrische Verbindung zwischen dem Übertragungselement, das beispielsweise als Spule ausgebildet sein kann, und dem integrierten Schaltkreis, der gegebenenfalls in Form eines elektronischem Moduls in den Datenträger eingebaut wird.

Es ist daher Aufgabe der Erfindung, den Aufbau des Datenträgers so zu gestalten, dass eine dauerhaft zuverlässige elektrische Verbindung zwischen dem Übertragungselement und dem integrierten Schaltkreis bzw. dem elektronischen Modul sicher gestellt ist.

Diese Aufgabe wird durch die Merkmalskombinationen der nebengeordneten Ansprüche gelöst.

Der wesentliche Aspekt der Erfindung besteht darin, dass der Datenträger so ausgebildet ist, dass er eine beidseitige Kontaktierung, d.h. eine Kontaktierung beider Hauptflächen des integrierten Schaltkreises bzw. des elektronischen Moduls, das den integrierten Schaltkreis enthält, mit dem Übertragungselement ermöglicht.

Diese Art der Kontaktierung hat den Vorteil, dass der Aufwand für einen Lötprozess oder eine Dosierung von Leitkleber zur Kontaktierung entfällt und dennoch eine sehr zuverlässige und langlebige elektrische Verbindung zwischen dem Übertragungselement und dem elektronischen Modul bzw. dem integrierten Schaltkreis erzielbar ist. Immer dann, wenn sich infolge einer Biegebeanspruchung oder anderer Effekte, die Kontakte des integrierten Schaltkreises oder des elektronischen Moduls auf einer Seite vom Übertragungselement entfernen und sich dadurch die elektrische Verbindung verschlechtert, tritt auf der gegenüberliegenden Seite des integrierten Schaltkreises oder des elektronischen Moduls genau der gegenläufige Effekt auf, so dass es zu einer Kompensierung der nachteiligen Auswirkungen kommt. Durch die geschilderte Bewegung wird das Übertragungselement auf der gegenüberliegenden Seite des integrierten Schaltkreises bzw. des elektronischen Moduls gegen die Kontakte des integrierten Schaltkreises bzw. des elektronischen Moduls gepresst, so dass die elektrische Verbindung zwischen dem integrierten Schaltkreis bzw. dem elektronischen Modul und dem Übertragungselement wenigstens nicht deutlich verschlechert oder sogar verbessert wird. Dadurch wird gewährleistet, dass der elektronische Datenträger selbst bei starker Biegebeanspruchung noch zuverlässig arbeitet.

Weiterhin nimmt - unabhängig von der Ursache für das Ablösen des Übertragungselements von einem oder mehreren Kontakten des elektronischen Moduls bzw. des integrierten Schaltkreises - durch die redundante Auslegung der Verbindungsstellen das Risiko für eine dadurch verursachte Betriebsstörung ab. Der geschilderte Kompensierungs- bzw. Redundanzeffekt setzt allerdings voraus, dass das verwendete elektronische Modul bzw. der verwendete integrierte Schaltkreis über Kontakte verfügt, die von beiden Hauptflächen aus zugänglich sind oder über zwei Sätze von Kontakten, die zueinander redundant sind, wobei je ein Satz auf einer der beiden Hauptflächen angeordnet ist. Dies ist insbesondere bei sogenannten Leadframe-Modulen ohnehin der Fall, bei denen der integrierte Schaltkreis auf einem dünnen Metallrahmen angeordnet ist. Die Erfindung kann daher besonders vorteilhaft in Zusammenhang mit Leadframe-Modulen eingesetzt werden.

Aber auch bei elektronischen Modulen bzw. bei integrierten Schaltkreisen, die nur über eine der beiden Hauptflächen kontaktierbar sind, bietet die Erfindung Vorteile. So wird auch in diesem Fall ein zusätzlicher Freiheitsgrad für die Herstellung des Datenträgers gewonnen, da das Übertragungselement in unterschiedlichen Einbaulagen des elektronischen Moduls bzw. des integrierten Schaltkreises kontaktierbar ist.

Ein weiterer Vorteil der Erfindung besteht darin, dass sich ausgehend von dem aus der EP 0 756 244 A2 bekannten Datenträger die oben geschilderte Verbesserung der elektrischen Verbindung zwischen dem Übertragungselement und dem integrierten Schaltkreis bzw. dem elektronischen Modul durch die relativ einfache Maßnahme der beidseitigen Konaktierung erreichen lässt, die ohne die Einführung einer neuen Technologie in den Fertigungsprozess realisiert werden kann und damit das Herstellungsverfahren kaum verteuert.

Das Übertragungselement wird vorzugsweise in Form einer Spule auf isolierende Schichten des Datenträgers aufgedruckt, wobei die Siebdrucktechnik besonders gut geeignet ist.

Die Erfindung wird nachstehend anhand der Zeichnungen erläutert. Dabei werden als Ausführungsformen für den Datenträger eine Chipkarte und für das Übertragungselement eine gedruckte Spule gewählt. Der Datenträger kann natürlich auch andere Baumformen annehmen und beispielsweise in einen Schlüssel oder in andere Gegenstände des täglichen Gebrauchs integriert sein. Für das Übertragungselement kommt beispielsweise auch eine elektrostatische Koppelfläche in Frage.

Es zeigen:
- Fig. 1: ein Ausführungsbeispiel der erfindungsgemäßen Chipkarte, bei der der integrierte Schaltkreis in Form eines elektronischen Moduls in den Kartenkörper eingelagert ist, in Aufsicht,
- Fig. 2: ein weiteres Ausführungsbeispiel der erfindungsgemäßen Chipkarte, bei der der integrierte Schaltkreis direkt in den Kartenkörper eingelagert ist, in Aufsicht,
- Fig. 3: einen Schichtaufbau der in Fig. 1 dargestellten Chipkarte vor dem Laminieren im Querschnitt entlang der Linie A - A,
- Fig. 4: die in Fig. 1 dargestellte Chipkarte im Querschnitt entlang der Linie A - A,
- Fig. 5: einen Schichtaufbau der in Fig. 2 dargestellten Chipkarte vor dem Laminieren im Querschnitt entlang der Linie A - A und
- Fig. 6: die in Fig. 2 dargestellte Chipkarte im Querschnitt entlang der Linie A - A.

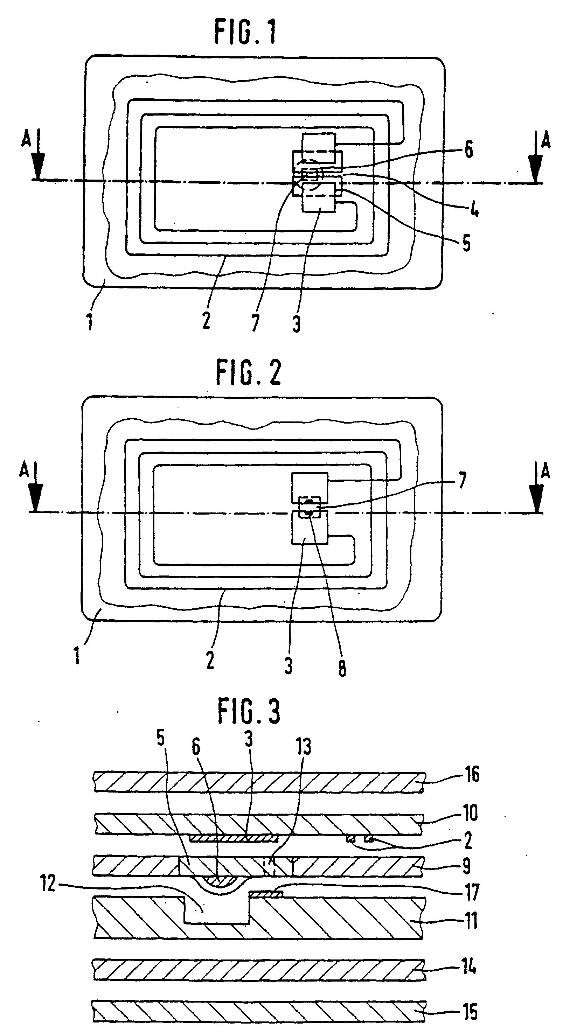

Fig. 1 zeigt ein Ausführungsbeispiel der erfindungsgemäßen Chipkarte, bei der der integrierte Schaltkreis in einem elektronischen Modul verpackt ist, in Aufsicht. Die Chipkarte 1 ist für den berührungslosen Datenaustausch mit einer externen Einrichtung ausgelegt und erfüllt bezüglich ihren äußeren Abmessungen die ISO-Norm 7810. Innerhalb eines durch eine geschlängelte Linie eingegrenzten Bereichs ist eine Ansicht des inneren Aufbaus der Chipkarte 1 dargestellt. Der besseren Übersichtlichkeit halber sind die einzelnen Kartenschichten nicht dargestellt und es sind stattdessen nur die in den oder zwischen den Schichten eingebetteten Komponenten gezeigt. Diese Komponenten bestehen insbesondere aus einer Spule 2, deren Enden 3 stark verbreitert sind, um einen möglichst guten elektrischen Kontakt mit einem elektronischen Modul 4 herzustellen, in das ein integrierter Schaltkreis 7 eingebettet ist. Der integrierte Schaltkreis 7 wird von einem Vergusskörper 6 abgedeckt und ist mit den Kontaktflächen 5 des elektronischem Moduls 4 leitend verbunden. Das elektronische Modul 4 ist vorzugsweise als Leadframe-Modul ausgebildet, bei dem die metallischen Kontaktflächen 5 als Trägersubstrat für den integrierten Schaltkreis 7 samt Vergusskörper 6 dienen. Die Kontaktflächen 5 sind jeweils mit den verbreiterten Enden 3 der Spule 2 elektrisch leitend verbunden. Weiterhin sind die Rückseiten der Kontaktflächen 5 mit elektrisch leitenden Flächen 17 verbunden, die in Fig. 1 nicht sichtbar sind, da sie unter den Spulenenden 3 zu liegen kommen. Jede der elektrisch leitenden Flächen 17 ist zudem mit je einem Spulenende 3 verbunden.

Die Spule 2 und auch die verbreiterten Spulenenden 3 sowie die elektrisch leitenden Flächen 17 werden vorzugsweise in Drucktechnik hergestellt und die elektrische Verbindung zwischen den Spulenenden 3 bzw. den elektrisch leitenden Flächen 17 und den Kontaktflächen 5 kommt dadurch zustande, dass die einzelnen Schichten, aus denen die Chipkarte 1 besteht und die die Spule 2 bzw. das elektronische Modul 4 tragen, durch Laminieren zu einem Kartenkörper verbunden werden, so dass sich die Spulenenden 3 bzw. die elektrisch leitenden Flächen 17 und die Kontaktflächen 5 nunmehr dauerhaft berühren. Diese Berührung zwischen den Spulenenden 3 bzw. den elektrisch leitenden Flächen 17 und den Kontaktflächen 5 kann wahlweise zu einem Zeitpunkt hergestellt werden, zu dem die aufgedruckten Spulenenden 3 bzw. die elektrisch leitenden Flächen 17 bereits völlig abgetrocknet sind oder aber zu einem Zeitpunkt, zu dem der Trockenvorgang noch nicht beendet ist. Erfindungsgemäß werden die Kontaktflächen 5 jeweils beidseitig mit den Spulenenden 3 verbunden. Wie bereits oben erläutert ist dies der Fig. 1 nicht entnehmbar, da die elektrisch leitenden Flächen 17, die mit der Rückseite der Kontaktflächen 5 verbunden sind, genau unter den dargestellten Spulenenden 3 zu liegen kommen und daher nicht sichtbar sind. Die erfindungsgemäße Kontaktierungstechnik ist jedoch in den Fig. 3 bis 6 deutlich erkennbar und wird anhand dieser Figuren auch im Einzelnen beschrieben.

Fig. 2 zeigt eine weitere Ausführungsform der erfindungsgemäßen Chipkarte 1, die sich von Fig. 1 lediglich darin unterscheidet, dass der integrierte Schaltkreis 7 nicht in einem elektronischen Modul 4 verpackt ist, sondern direkt in den Kartenkörper eingebettet ist. Der integrierte Schaltkreis 7 weist an seiner Oberfläche Kontakte 8 auf, die mit den Spulenenden 3 in einer berührenden Verbindung stehen. Entsprechend Fig. 1 sind auch beim Ausführungsbeispiel gemäß Fig. 2 die Spulenenden 3 zusätzlich mit den elektrisch leitenden Flächen 17 verbunden, die wiederum auf der Rückseite des integrierten Schaltkreises 7 angeordneten Kontakten 8 verbunden sind.

Fig. 3 zeigt den Schichtaufbau der in Fig. 1 dargestellten Chipkarte 1 vor dem Laminieren der einzelnen Schichten im Querschnitt längs der Linie A -A. Bei dem in Fig. 3 dargestellten Ausführungsbeispiel besteht die Chipkarte 1 aus sechs einzelnen Schichten. Das elektronische Modul 4 ist in einer Schicht 9 angeordnet und zwar so, dass die Kontaktflächen 5 des elektronischem Moduls 4 in einer Ausnehmung der Schicht 9 zu liegen kommen und der Vergusskörper 6 über die Schicht 9 hinausragt. Beidseits der Schicht 9 sind Schichten 10 und 11 angeordnet. Die Schicht 10 trägt die aufgedruckte Spule 2 einschließlich der Spulenenden 3, wobei die Spulenenden 3 gegenüber den Kontaktflächen 5 des elektronischen Moduls 4 zu liegen kommen. Die Schicht 11 ist auf der Seite der Schicht 9 angeordnet, über die der Vergusskörper 6 hinausragt und enthält eine Ausnehmung 12 zur Aufnahme des Vergusskörpers 6. Statt der Ausnehmung 12 kann die Schicht 11 auch eine Lochung aufweisen, die die Schicht 11 vollständig durchdringt. Weiterhin trägt die Schicht 11 die elektrisch leitenden Flächen 17, die über wenigstens eine Durchkontaktierung 13 in der Schicht 9 mit den auf der Schicht 10 angeordneten Spulenenden 3 elektrisch leitend verbunden werden können. In Richtung Kartenaußenseite schließt sich an die Schicht 11 noch eine Schicht 14 und schließlich eine Deckschicht 15 an. An die Schicht 10 schließt sich in Richtung zur Kartenaußenseite eine Deckschicht 16 an. Der Schichtaufbau kann je nach Einsatzgebiet in weiten Grenzen variieren. Insbesondere können die Deckschichten 15 und 16 oder die Schichten 10 und 14 entfallen. Sämtliche Schichten können aus den bei Chipkarten üblicherweise eingesetzten Materialien, beispielsweise PVC, ABS, PETG, Polycarbonat usw. bestehen.

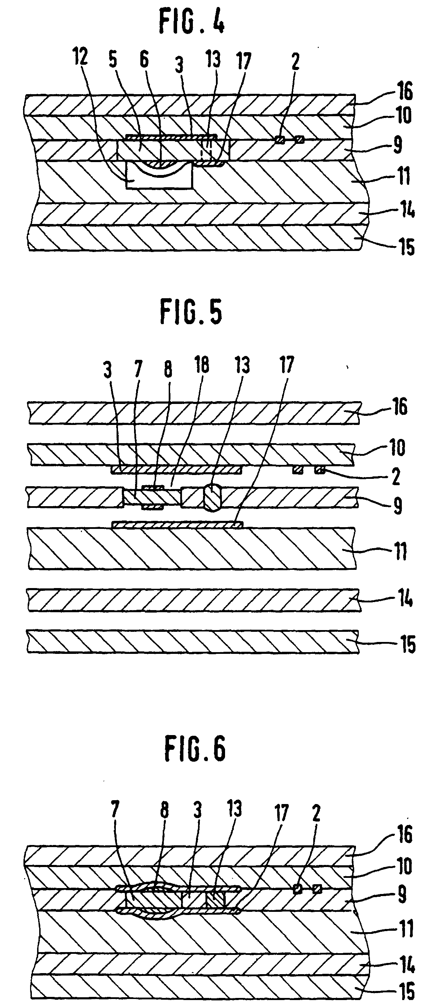

Fig. 4 zeigt die in Fig.1 dargestellte Chipkarte 1 im Querschnitt längs der Linie A - A. Die in Fig. 4 dargestellte Chipkarte 1 wurde durch Laminieren des in Fig. 3 dargestellten Stapels von Einzelschichten hergestellt. Vor dem Übereinanderstapeln der Schichten werden diese mit den in Fig. 3 gezeigten Komponenten, wie beispielsweise der Spule 2 samt verbreiterten Spulenenden 3, den elektrisch leitenden Flächen 17, den Durchkontaktierungen 13 und dem elektronischen Modul 4 versehen. In Fig. 4 ist die erfindungsgemäße beidseitige Kontaktierung der Kontaktflächen 5 des elektronischen Moduls 4 durch die Spulenenden 3 und die elektrisch leitenden Flächen 17 deutlich erkennbar. Die elektrische Verbindung zwischen den Spulenenden 3 und den Kontaktflächen 5 wird durch den Laminiervorgang hergestellt. Dabei werden die Spulenenden 3 gegen die Oberseite der Kontakflächen 5 gepresst und die elektrisch leitenden Flächen 17 werden jeweils durch wenigstens eine Durchkontaktierung 13 mit den Spulenenden 3 elektrisch leitend verbunden und gegen die Unterseite der Kontaktflächen 5 gepresst. Mit dieser Vorgehensweise wird eine beidseitige Kontaktierung der Kontaktflächen 5 erreicht, so dass auch dann eine zuverlässige elektrische Verbindung zwischen der Spule 2 und dem integrierten Schaltkreis 8 sicher gestellt ist, wenn sich beispielsweise infolge einer Biegebeanspruchung der Chipkarte 1 die Spulenenden 3 von den Kontaktflächen 5 ablösen. In diesem Fall bleibt der elektrische Kontakt weiterhin durch die elektrisch leitenden Flächen 17 erhalten.

Ein weiterer Effekt der beidseitigen Kontaktierung besteht darin, dass für die in Fig. 4 dargestellte Chipkarte 1 elektronische Module 4 unterschiedlicher Bauart eingesetzt werden können, wobei es unerheblich ist, ob die Kontaktierung des elektronischen Moduls 4 nur von der Oberseite her, nur von der Unterseite her oder beidseitig möglich ist. Für den Fall, dass es sich um nur einseitig kontaktierbare elektronische Module 4 handelt, entfällt natürlich der Vorteil der höheren Zuverlässigkeit der elektrischen Verbindung, wie er bei einer beidseitigen Kontaktierung erreicht wird. Der in Fig. 4 dargestellte Kartenaufbau bietet jedoch gegenüber herkömmlichen Kartenaufbauten mit einseitiger Kontaktierung den Vorteil, dass der Kartenaufbau in unveränderter Form für unterschiedliche elektronische Module 4 verwendbar ist.

Fig. 5 zeigt den Schichtaufbau der in Fig. 2 dargestellten Chipkarte 1 vor dem Laminieren der einzelnen Schichten im Querschnitt längs der Linie A - A. Die Schichtfolge entspricht der in Fig. 3 dargestellten Schichtfolge, wobei die Schichten 9 und 11 allerdings modifiziert sind. Gemäß Fig. 5 weist die Schicht 9 eine Durchbrechung 18 auf, in die der integrierte Schaltkreis 7 eingelagert ist. Weiterhin weist die Schicht 9 wenigstens eine Durchkontaktierung 13 auf. Im Gegensatz zur Fig. 3 weist die in Fig. 5 dargestellte Schicht 11 keine Ausnehmung 12 auf und trägt lediglich die elektrisch leitenden Flächen 17, die gegenüber den Kontakten 8 des integrierten Schaltkreises 7 und jeweils gegenüber wenigstens einer Durchkontaktierung 13 angeordnet sind. In analoger Weise zur Fig. 3 trägt die Schicht 10 die Spule 2 und die Spulenenden 3, die gegenüber den in ihre Richtung weisenden Kontakten 8 des integrierten Schaltkreises 7 und jeweils gegenüber wenigstens einer Durchkontaktierung 13 angeordnet sind.

Fig. 6 zeigt die in Fig. 2 dargestellte Chipkarte 1, die durch Laminierung des in Fig. 5 dargestellten Schichtenstapels hergestellt wurde, im Querschnitt längs der Linie A - A. Durch den Laminierprozess werden die Spulenenden 3 jeweils gegen die wenigstens eine Durchkontaktierung 13 und gegen die ihnen zugewandten Kontakte 8 des integrierten Schaltkreises 7 gepresst und gehen dabei elektrisch leitende Verbindungen ein. Auf der gegenüberliegenden Seite der Schicht 9 werden die elektrisch leitenden Flächen 17 gegen die ihnen zugewandten Kontakte 8 des integrierten Schaltkreises 7 und jeweils gegen die wenigstens eine Durchkontaktierung 13 gepresst, so dass hier ebenfalls elektrisch leitende Verbindungen entstehen. Insgesamt werden durch die Laminierung die Spulenenden 3 jeweils über die jeweils wenigstens eine Durchkontaktierung 13 mit den elektrisch leitenden Flächen 17 verbunden und sowohl die Spulenenden 3 als auch die elektrisch leitenden Flächen 17 werden jeweils mit den ihnen zugewandten Kontakten 8 des integrierten Schaltkreises 7 elektrisch leitend verbunden.

Auch bei der in Fig. 6 dargestellten Ausführungsform der erfindungsgemäßen Chipkarte 1 hat die beidseitige Kontaktierung einerseits den Effekt, wenig empfindlich gegen Biegebeanspruchung oder andere Beanspruchungen zu sein, die zu Kontaktproblemen führen können, und andererseits eine universelle Einbaumöglichkeit für den integrierten Schaltkreis 7 zu bieten, der auch nur auf einer Seite Kontakte 8 tragen kann und dann wahlweise so eingebaut werden kann, dass diese Kontakte 8 zur Schicht 10 oder zur Schicht 11 hinweisen.

Die in den beschriebenen Ausführungsbeispielen dargestellte Schichtfolge ist nur als eine unter vielen Möglichkeiten anzusehen. Es können also beliebige andere Schichtaufbauten in gleicher Weise zur Realisierung des Erfindungsgedankens verwendet werden. Wesentlich dabei ist, dass eine beidseitige Kontaktierung des elektronischen Moduls 4 bzw. des integrierten Schaltkreises 7 möglich ist oder dass alternativ dazu elektronische Module 4 bzw. integrierte Schaltkreise 7, die nur auf einer Seite Kontaktflächen 5 bzw. Kontakte 8 aufweisen, wahlweise so eingebaut werden können, dass die Kontaktflächen 5 bzw. die Kontakte 8 wahlweise zur einen oder zur anderen Hauptfläche der Chipkarte zeigen.

Die Spule 2 kann auch wahlweise auf einer einzigen Schicht ein- oder beidseitig aufgebracht werden oder auch auf mehrere Schichten verteilt werden.

In einer Abwandlung der Erfindung wird die Spule 2 teils auf die Schicht 10 und teils auf die Schicht 11 aufgebracht. Die beiden Spulenteile werden durch wenigstens eine Durchkontaktierung in der Schicht 9 miteinander verbunden. Die Schichten 10 und 11 tragen je ein Spulenende 3 und je eine elektrisch leitende Fläche 17, die jeweils über wenigstens eine Durchkontaktierung 13 in der Schicht 9 mit dem Spulenende 3 der jeweils anderen Schicht 11 bzw. 10 verbunden ist.

In einer weiteren Abwandlung der Erfindung wird wenigstens ein Teil der Spule 2, der Spulenenden 3 und/oder der elektrisch leitenden Flächen 17 auf die Schicht 9 aufgebracht, die das elektronische Modul 4 bzw. den integrierten Schaltkreis 7 aufweist, wobei die Anordnung der einzelnen Komponenten in der Karte beibehalten werden kann.

## Patentansprüche

1. Kontaktlos betreibbarer Datenträger (1) mit
- wenigstens einem Übertragungselement (2), mit dem Daten kontaktlos mit einer externen Einrichtung ausgetauscht werden können und
- einem elektronischen Modul (4), das Kontaktflächen (5) aufweist zur Herstellung einer elektrischen Verbindung mit dem Übertragungselement (2) und einen integrierten Schaltkreis (7) enthält, der die Daten liefert oder verarbeitet,
**dadurch gekennzeichnet, dass**
- der Datenträger (1) an die beiden Hauptflächen des elektronischen Moduls (4) angrenzende, elektrisch leitende Flächen (3, 17) aufweist, die sich im wesentlichen gegenüberliegen,
- die elektrisch leitenden Flächen (3,17) des Datenträgers (1) jeweils mit den ihnen gegenüberliegenden Kontaktflächen (5) des elektronischen Moduls (4) elektrisch leitend verbunden sind,
- die elektrisch leitenden Flächen (3,17) des Datenträgers (1) jeweils paarweise untereinander mittels einer Durchkontaktierung (13) elektrisch leitend verbunden sind und
- jedes Paar von elektrisch leitenden Flächen (3, 17) mit dem Übertragungselement (2) elektrisch leitend verbunden ist.

2. Kontaktlos betreibbarer Datenträger (1) mit
- wenigstens einem Übertragungselement (2), mit dem Daten kontaktlos mit einer externen Einrichtung ausgetauscht werden können und
- einem integrierten Schaltkreis (7), der die Daten liefert oder verarbeitet und Kontakte (8) aufweist zur Herstellung einer elektrischen Verbindung mit dem wenigstens einen Übertragungselement (2),
**dadurch gekennzeichnet, dass**
- der Datenträger (1) an die beiden Hauptflächen des integrierten Schaltkreises (7) angrenzende, elektrisch leitende Flächen (3,17) aufweist, die sich im wesentlichen gegenüberliegen,
- die elektrisch leitenden Flächen des Datenträgers (1) jeweils mit den ihnen gegenüberliegenden Kontakten (8) des integrierten Schaltkreises (7) elektrisch leitend verbunden sind,
- die elektrisch leitenden Flächen (3,17) des Datenträgers (1) jeweils paarweise untereinander mittels einer Durchkontaktierung (13) elektrisch leitend verbunden sind und
- jedes Paar von elektrisch leitenden Flächen (3,17) mit dem Übertragungselement (2) elektrisch leitend verbunden ist.

3. Datenträger nach Anspruch 1, **dadurch gekennzeichnet, dass** das elektronische Modul (4) auf beiden Hauptflächen Kontaktflächen (5) aufweist, die jeweils paarweise miteinander verbunden sind.

4. Datenträger nach Anspruch 1, **dadurch gekennzeichnet, dass** die Kontaktflächen (5) des elektronischen Moduls (4) zwischen den beiden Hauptflächen des elektronischen Moduls (4) durchgehend sind.

5. Datenträger nach einem der vorhergehenden Ansprüche, **dadurch gekennzeichnet, dass** wenigstens ein Teil der elektrisch leitenden Flächen (3, 17) Bestandteil des wenigstens einen Übertragungselements (2) ist.

6. Datenträger nach einem der vorhergehenden Ansprüche, **dadurch gekennzeichnet, dass** es sich bei dem Übertragungselement (2) um eine aufgedruckte Spule handelt.

7. Datenträger nach einem der vorhergehenden Ansprüche, **dadurch gekennzeichnet, dass** die elektrisch leitenden Flächen (3, 17) drucktechnisch aufgebracht sind.

8. Datenträger nach einem der vorhergehenden Ansprüche, **dadurch gekennzeichnet, dass** es sich bei dem Datenträger um eine Chipkarte handelt.

9. Verfahren zur Herstellung eines Datenträgers (1) gemäß den Schritten
- Einbringen eines elektronischen Moduls (4), das einen integrierten Schaltkreis (7) und Kontaktflächen (5) aufweist, oder eines integrierten Schaltkreises (7), der Kontakte (8) aufweist, in eine erste Schicht (9),
- Aufbringen von elektrisch leitenden Flächen (17) auf eine zweite Schicht (11),
- Aufbringen eines Übertragungselements (2) und von weiteren elektrisch leitenden Flächen (3) auf wenigstens einen dritte Schicht, wobei die elektrisch leitenden Flächen (3) Bestandteil des Übertragungselements (2) sind oder elektrisch leitend mit dem Übertragungselement (2) verbunden werden,
- Anordnen der genannten Schichten zu einem Stapel, wobei die erste Schicht (9) mit dem elektronischen Modul (4) zwischen der zweiten Schicht (11) und der wenigstens einen dritten Schicht (10) zu liegen kommt,
- Laminieren des Stapels zu einem Verbund, wobei zwischen den Kontaktflächen (5) des elektronischen Moduls (4) und den jeweils gegenüberliegenden elektrisch leitenden Flächen (3,17) ein elektrischer Kontakt hergestellt wird und weiterhin ein Kontakt (13) zwischen den elektrisch leitenden Flächen (3, 17), der zweiten Schicht (11) und der dritten Schicht (10) hergestellt wird.

10. Verfahren nach Anspruch 9, **dadurch gekennzeichnet, dass** das Übertragungselement (2) und/oder die elektrisch leitenden Flächen (3, 17) nicht auf die zweite Schicht (11) und/oder die wenigstens eine dritte Schicht (10) aufgebracht werden, sondern jeweils auf die der jeweiligen Schicht (11, 10) im Stapel gegenüberliegenden Seite der ersten Schicht (9), in die das elektronische Modul (4) eingebracht ist.

## Claims

1. A contactlessly operated data carrier (1) having
- at least one transfer element (2) for exchanging data contactlessly with an external device, and
- an electronic module (4) having contact surfaces (5) for establishing an electric connection with the transfer element (2) and containing an integrated circuit (7) which delivers or processes the data,
**characterized in that**
- the data carrier (1) has electroconductive surfaces (3, 17) adjacent the two main faces of the electronic module (4) and substantially opposite each other,
- the electroconductive surfaces (3, 17) of the data carrier (1) are electrically connected with the opposing contact surfaces (5) of the electronic module (4) in each case,
- the electroconductive surfaces (3, 17) of the data carrier (1) are electrically interconnected in pairs by means of plated-through holes (13), and
- each pair of electroconductive surfaces (3, 17) is electrically connected with the transfer element (2).

2. A contactlessly operated data carrier (1) having
- at least one transfer element (2) for exchanging data contactlessly with an external device, and
- an integrated circuit (7) which delivers or processes the data and has contacts (8) for establishing an electric connection with the at least one transfer element (2),
**characterized in that**
- the data carrier (1) has electroconductive surfaces (3, 17) opposite the two main faces of the integrated circuit (7) and substantially opposite each other,
- the electroconductive surfaces of the data carrier (1) are electrically connected with the opposing contacts (8) of the integrated circuit (7) in each case,
- the electroconductive surfaces (3, 17) of the data carrier (1) are electrically interconnected in pairs by means of plated-through holes (13), and
- each pair of electroconductive surfaces (3, 17) is electrically connected with the transfer element (2).

3. A data carrier according to claim 1, **characterized in that** the electronic module (4) has contact surfaces (5) on both main faces which are interconnected in pairs.

4. A data carrier according to claim 1, **characterized in that** the contact surfaces (5) of the electronic module (4) are continuous between the two main faces of the electronic module (4).

5. A data carrier according to any of the above claims, **characterized in that** at least part of the electroconductive surfaces (3, 17) is part of the at least one transfer element (2).

6. A data carrier according to any of the above claims, **characterized in that** the transfer element (2) is a printed coil.

7. A data carrier according to any of the above claims, **characterized in that** the electroconductive surfaces (3, 17) are applied by printing technology.

8. A data carrier according to any of the above claims, **characterized in that** the data carrier is a chip card.

9. A method for producing a data carrier (1) comprising the steps of
- incorporating an electronic module (4) having an integrated circuit (7) and contact surfaces (5), or an integrated circuit (7) having contacts (8), into a first layer (9),
- applying electroconductive surfaces (17) to a second layer (11),
- applying a transfer element (2) and further electroconductive surfaces (3) to at least one third layer, the electroconductive surfaces (3) being part of the transfer element (2) or being electrically connected with the transfer element (2),
- disposing the stated layers in a stack, the first layer (9) with the electronic module (4) coming to lie between the second layer (11) and the at least one third layer (10),
- laminating the stack into a compound, an electric contact being established between the contact surfaces (5) of the electronic module (4) and the particular opposing electroconductive surfaces (3, 17), and.
- a contact (13) is further established between the electroconductive surfaces (3, 17), the second layer (11) and the third layer (10).

10. A method according to claim 9, **characterized in that** the transfer element (2) and/or the electroconductive surfaces (3, 17) are not applied to the second layer (11) and/or the at least one third layer (10), but to the side opposite the particular layer (11, 10) in the stack, of the first layer (9) into which the electronic module (4) is incorporated.

## Revendications

1. Support de données (1) susceptible de fonctionner sans contact avec :
- au moins un élément de transmission (2), à l'aide duquel des données peuvent être échangées sans contact, avec un dispositif externe, et
- un module électronique (4) qui présente des surfaces de contact (5) pour établir une liaison électrique avec l'élément de transmission (2) et contient un circuit de commutation (7) intégré, qui fournit ou traite les données,
**caractérisé en ce que** :
- le support de données (1) présente sur les deux faces principales du module électronique (4) des surfaces (3, 17), conductrices de l'électricité, limitrophes, qui sont pratiquement opposées ;
- les surfaces (3, 17) conductrices de l'électricité du support de données (1) sont chacune reliées de façon conductrice de l'électricité aux surfaces de contact (5), leur étant opposées, du module électronique (4) ;
- les surfaces (3, 17) conductrices de l'électricité du support de données (1) sont chacune reliées de façon conductrice de l'électricité par paires, entre elles, à l'aide d'un contact traversant (13) ; et
- chaque paire de surfaces (3, 17) conductrices de l'électricité est reliée, de façon conductrice de l'électricité, à l'élément de transmission (2).

2. Support de données (1) susceptible de travailler sans contact avec :
- au moins un élément de transmission (2), à l'aide duquel des données peuvent être échangées sans contact, avec un dispositif externe , et
- un circuit de commutation (7) intégré, qui fournit ou traite les données et présente des contacts (8) pour établir une liaison électrique avec au moins un élément de transmission (2),
**caractérisé en ce que** :
- le support de données (1) présente sur les deux faces principales du circuit de commutation (7) intégré des surfaces (3, 17), conductrices de l'électricité, limitrophes, qui sont pratiquement opposées ;
- les surfaces conductrices de l'électricité du support de données (1) sont chacune reliées de façon conductrice de l'électricité avec les contacts (8), leur étant opposés, du circuit de commutation (7) intégré ;
- les surfaces (3, 17) conductrices de l'électricité du support de données (1) sont chacune reliées de façon conductrice de l'électricité par paire entre elles à l'aide d'un contact traversant (13) ; et
- chaque paire de surfaces (3, 17) conductrices de l'électricité est reliée de façon conductrice de l'électricité avec l'élément de transmission (2).

3. Support de données selon la revendication 1, **caractérisé en ce que** le module électronique (4) présente sur les deux faces principales des surfaces de contact (5) reliées ensemble chacune par paires.

4. Support de données selon la revendication 1, **caractérisé en ce que** les surfaces de contact (5) du module électronique (4) sont continues entre les deux faces principales du module électronique (4).

5. Support de données selon l'une des revendications précédentes, **caractérisé en ce qu'**au moins une partie des surfaces (3, 17) conductrices de l'électricité fait partie du au moins un élément de transmission (2).

6. Support de données selon l'une des revendications précédentes, **caractérisé en ce qu'**il s'agit, concernant l'élément de transmission (2), d'une bobine à conducteurs imprimés.

7. Support de données selon l'une des revendications précédentes, **caractérisé en ce que** les surfaces (3, 17) conductrices de l'électricité sont appliquées selon une technique d'impression.

8. Support de données selon l'une des revendications précédentes, **caractérisé en ce qu'**il s'agit concernant le support de données d'une carte à puce.

9. Procédé de fabrication d'un support de données (1) selon les étapes de:
- introduction d'un module électronique (4) qui présente un circuit de commutation (7) intégré et des surfaces de contact (5), ou d'un circuit de commutation (7) intégré, qui présente des contacts (8), dans une première couche (9);
- application de surfaces (17) conductrices de l'électricité sur une deuxième couche (11) ;
- application d'un élément de transfert (2) et d'autres surfaces (3) conductrices de l'électricité sur au moins une troisième couche, les surfaces (3) conductrices de l'électricité faisant partie de l'élément de transmission (2) ou bien étant reliées, de façon conductrice de l'électricité, à l'élément de transmission (2) ;
- agencement des couches citées en une pile, la première couche (9), avec le module électronique (4), venant se placer entre la deuxième couche (11) et la au moins une troisième couche (10) ;
- laminage de la pile pour former un composite, sachant que, entre les surfaces de contact (5) du module électronique (4) et les surfaces (3, 17) conductrices de l'électricité, chaque fois opposées, est établi un contact électrique et que, en plus, un contact (13) est établi entre les surfaces (3, 17) conductrices de l'électricité, la deuxième couche (11) et la troisième couche (10).

10. Procédé selon la revendication 9, **caractérisé en ce que** l'élément de transmission (2) et/ou les surfaces (3, 17) conductrices de l'électricité ne sont pas appliqués sur la deuxième couche (11) et/ou la au moins une troisième couche (10) mais, au contraire, chaque fois sur la face, opposée à la couche (11, 10) respective dans la pile, de la première couche (9), dans laquelle le module électronique (4) est inséré.
